# EUROPEAN PATENT SPECIFICATION

(11) **EP 3 696 078 B1**
(45) Date of publication and mention of the grant of the patent: **12.10.2022**
(21) Application number: 19157654.5
(22) Date of filing: 18.02.2019
(51) Int. Cl.: B63H 25/04, B63H 25/42, B63H 25/46, G05D 1/02, B63H 25/00, B63B 35/00

(54) **A METHOD AND SYSTEM FOR PILOTING AN UNMANNED SURFACE VESSEL**
VERFAHREN UND SYSTEM ZUR STEUERUNG EINES UNBEMANNTEN ÜBERWASSERSCHIFFS
PROCÉDÉ ET SYSTÈME DE PILOTAGE D'UN NAVIRE DE SURFACE SANS PILOTE

(43) Date of publication of application: 19.08.2020
(73) Proprietor: Xocean Limited, A91 PK18 Co. Louth (IE)
(72) Inventor: IVES, James, Co Louth, A91 PK18 (IE); CARLISLE, Andrew, Belfast, Antrim BT8 7YT (GB)
(74) Representative: FRKelly

(56) References cited:
- EP-A1- 3 214 522
- WO-A2-2012/034119
- CN-A- 108 227 715
- US-A1- 2002 178 990
- US-A1- 2003 191 562
- US-A1- 2007 203 623
- US-A1- 2014 080 367

## Description

### Field of the invention

This invention relates to piloting of an unmanned marine surface vessel, and in particular a marine surface vessel with independently controllable fixed thrusters on the outer hull of the vessel and using co-ordinated difference of thrust to achieve vessel steering.

### Background of the invention

Ocean Data is required by multiple industries, examples including:
▪ Industrial: Oil & Gas, Seabed Mining, Interconnectors
▪ Fisheries: Stock Management, Aquaculture, Protection
▪ Offshore Renewables: Offshore Wind, Tidal Energy, Wave Energy.
▪ Transport: Shipping, Ports & Harbours.
▪ Safety & Security: Maritime Safety, Border Surveillance.

The type of data that is collected varies from industry to industry, and the type of sensors and other equipment utilised in said data collection can therefore also vary significantly. The following lists the type of sensors and other equipment based on the particular survey to be undertaken:
Oceanography, Hydrography & Meteorological Surveys
   ▪ ADCP Acoustic Doppler Current Profiler
   ▪ CTD Conductivity, Temperature & Depth Profiler
   ▪ Magnetometer (detection of seabed metallic objects)
   ▪ Side Scan / Sub Bottom Profiler (seabed properties)
   ▪ Single / Multibeam Echo Sounder (seabed mapping)
   ▪ Weather Station (wind speed, direction, temperature, pressure etc)
Environmental Surveys
   ▪ Acoustic Fish Count (fisheries management)
   ▪ Chemical / Biological Sensors (measurement of oxygen, chlorophyll etc.)
   ▪ PAM Passive Acoustic Monitoring (monitoring of marine mammals and noise)
Subsea Communications
   ▪ Acoustic Modem (communication with subsea systems)
   ▪ Ultra-Short Baseline Positioning (underwater acoustic positioning)
Vessel Surveillance
   ▪ AIS Automatic Identification System (vessel identification)
   ▪ Hydrophone (vessel detection)
   ▪ Thermal Camera

Collection of ocean data is traditionally performed using a conventional vessel fitted with an array of the above sensors, which vessel is then manned by a crew. This traditional approach is slow, expensive and carries significant health & safety risks.

An unmanned vessel can be used in place of a manned vessel. This leads to improved cost and safety. Cost is reduced by significantly reducing the crewing requirement per hour of vessel operation coupled with use of a smaller, lighter, and more fuel efficient vessel. Safety is improved by removing personnel from the dangerous marine environment, and use of a smaller, lighter vessel reduces the potential for the vessel to cause damage to other marine users.

The vessel must be provided with a means of steering. In the case of an unmanned vessel, it is imperative that the means of steering is robust and reliable, and preferably has a minimum impact on power consumption. Traditional steering mechanisms include rudders and turnable (vectoring) thrusters - both of which require a powered mechanism, increasing weight, complexity, and power consumption.

The use of a pair of independently controllable fixed thrusters on the outer hull of a vessel, using co-ordinated difference of thrust to achieve vessel steering is known. However, this use of such fixed thrusters with unmanned vessels is limited. In particular, known systems and methods for piloting are designed for use by a human operator physically in the presence of the vessel.

US 2014/080367 relates to a water vessel having variable geometry. The water vessel comprises: a frame; a plurality of hulls coupled to the frame, each one of the plurality of hulls coupled to the frame by a folding mechanism and configured to move, relative to the frame, between a deployed configuration and a stowed configuration in which at least one dimension of the water vessel is reduced in respect of the deployed configuration; a plurality of thruster assemblies configured to provide thrust to the water vessel, each one of the plurality of thruster assemblies being coupled to a respective one of the plurality of hulls; and a protective device coupled to a respective one of the plurality of thruster assemblies, the protective device for preventing intake of foreign objects into the respective one of the plurality of thruster assemblies.

EP 3 214 522 relates to a method for manoeuvring a marine vessel powered by a propulsion system includes accepting inputs to an electronic navigation device and generating a desired track based on the inputs. The desired track includes a series of waypoints, each waypoint in the series of waypoints being associated with a respective heading. The method also includes sending position and orientation information corresponding to each waypoint and its associated heading to a control module. Based on the position and orientation information, the control module generates steering and thrust commands that are required to manoeuvre the marine vessel from a current waypoint and heading in the series to a following waypoint and heading in the series. According to the steering and thrust commands, the propulsion system thereafter propels the marine vessel along the desired track to each waypoint and its associated heading in succession. A corresponding system is also disclosed.

US 2007/203623 relates to an autonomous water-borne vehicle having a segmented non-planing hull with free flood fore and aft sections and a sealed centre section. The disclosure also describes such a vehicle having a fixed longitudinal thruster and a fixed lateral thruster for changing the heading of the vehicle. The disclosure also describes such a vehicle having an autonomous mission system, an autonomous navigation system, and a web-based command and control system. The disclosure also describes such a vehicle having a submersible winch. The disclosure also describes such a vehicle wherein the sealed centre section is of substantially rectangular cross section. The disclosure also describes such a vehicle having a wheeled battery tray.

US 2002/178990 relates to an underwater or submersible vehicle including an elongated body having a substantially ellipsoidal forward section, a substantially cylindrical mid-section, and a tapered aft section having an internal vectored thrust propulsion system for propelling and manoeuvring the vehicle through a fluid operating environment. At least two discharge nozzles are located along a horizontal beam on opposite sides of a longitudinal centreline in the aft section for providing differential and/or vectored thrust for propelling and manoeuvring the vehicle through the fluid operating environment.

US 2003/191562 relates to anchorless boat positioning system for establishing and maintaining a boat at a selected geographic location without the use of a conventional anchor. In one embodiment, a steerable thruster is used whose thrust and steering direction are determined and controlled on the basis of position information signals received from global positioning system (GPS) satellites, relative steering angle between the boat and the thruster and boat heading indication signals from a magnetic compass. The system continuously monitors the position and heading of the boat and compares it with the stored coordinates of the selected anchoring location(s) to generate control signals for the steerable motor. Several modes of operation are disclosed and Euler transformations for offset antenna placement for error reduction are taught. Proportional, integral, and derivative control (PID) of four constants of vessel control is also provided. Multiple thrusters in various arrangements are also provided to control either the orientation of the boat or a second point of interest on the boat at a second geographic location.

WO 2012/034119 relates to a computer implemented method for guiding an under-actuated marine surface vessel in tracking a desired trajectory comprises expressing a predetermined vessel trajectory as a set of straight line segments, determining a desired current line segment, and determining the vessel's current position. A cross-track error and the derivative of the cross-track error are then determined. Next, a radius R of the line-of-sight (LOS) circle using a newly introduced exponential function is determined. Intersection points M and N between the LOS circle and the current desired line segment are determined. A desired heading angle is determined as the angle between the line of sight and a predetermined fixed reference line. A drift detection algorithm is built into the proposed guidance scheme to detect situations whereby the ship moves parallel to its desired trajectory for an extended period of time without being able to correct for the cross track error. The drift algorithm continuously monitors the ship motion relative to the desired trajectory and, upon drift detection, modifies the desired heading angle to enable the controller to compensate for the ship drift. This allows the ship to accurately track its desired trajectory.

CN 108 227 715 relates to a wave-resistant and energy-saving path tracking method for unmanned surface vehicles. On the basis of a convention path tracking control method for unmanned surface vehicles, awave observation module and a fuzzy inference module are added; wave heights and encounter angles detected by the wave observation module are adopted as inputs for the fuzzy inference module; a relation between the wave heights, the encounter angles and structure parameters of a controller is established by the fuzzy inference module, and the structure parameters of the controller are dynamically adjusted.

It is therefore an object of the present invention to overcome one or more of the above mentioned issues.

### Summary of the invention

The present invention is defined in the appended independent claims to which reference should be made. Advantageous features are set out in the appended dependent claims. The present teachings relate to a piloting system for an unmanned marine vessel having a first thruster and a second thruster attached to the vessel, the first thruster and second thruster spaced apart from each other, wherein the system is configured to pilot the vessel in a straight line mode of operation in which the vessel autonomously tracks a line between two waypoints and a circling mode of operation in which the vessel autonomously tracks a circle around a waypoint, wherein when the vessel is piloted in said straight line mode, the system controls the overall thrust level applied to the first and second thrusters and the thrust differential between the first and second thrusters to maintain the vessel on the line, and wherein when the vessel is piloted in said circling mode, the system controls the overall thrust level applied to the first and second thrusters and the thrust differential between the first and second thrusters to maintain the vessel on the circle.

Optionally, thrust differential between the overall thrust level is automatically adjusted by the system in response to a predetermined target velocity and measured speed over ground in order to achieve the target velocity.

Optionally, controlling the thrust differential between the first and second thruster includes increasing the thrust to the first thruster and decreasing the thrust from the second thruster by the same amount so that the average power consumption of the first and second thrusters is constant.

Optionally, the thrust differential is calculated using cross track error, in the straight line mode the cross track error is the distance between the vessel and the line.

Optionally, if a cross track error is detected the system adjusts the thrust differential to steer the vessel to reduce the cross track error to zero.

Optionally, the thrust differential is calculated using one of course over ground error and heading error, in the straight line mode the course over ground error is the angle between the direction in which the vessel is travelling and the line and the heading error is the angle between where the vessel is pointed and the line.

Optionally, if a course over ground error is detected the system adjusts the thrust differential to steer the vessel to reduce the angle between the direction in which the vessel is travelling and the line to zero.

Optionally, if a heading error is detected the system adjusts the thrust differential to steer the vessel to reduce angle between where the vessel is pointed and the line to zero.

Optionally, the thrust differential is calculated using cross track error, in the circling mode the cross track error is the distance between the vessel and the waypoint minus the radius of the circle.

Optionally, if a cross track error is detected the system adjusts the thrust differential to steer the vessel to reduce the cross track error to zero.

Optionally, the thrust differential is calculated using one of course over ground error and heading error, in the circling mode the course over ground error is the angle between the direction in which the vessel is travelling and a tangent to the circle, the heading error is the angle between where the vessel is pointed and the tangent to the circle, the tangent being the bearing from the vessel to the waypoint rotated by 90 degrees.

Optionally, if a course over ground error is detected the system adjusts the thrust differential to steer the vessel to reduce the angle between the direction in which the vessel is travelling and the tangent to zero.

Optionally, if a heading error is detected the system adjusts the thrust differential to steer the vessel to reduce angle between where the vessel is pointed and the tangent to zero.

Optionally, the tangent is at a constantly changing angle around the circle as the vessel moves and the system compensates for this by creating an additional steering signal to provide oversteer in order to maintain the vessel on the circle.

The present teachings also relate to a method for piloting an unmanned marine vessel having a first thruster and a second thruster, the first thruster and second thruster spaced apart from each other, the method comprising, piloting the vessel in a straight line mode of operation in which the vessel autonomously tracks a line between two waypoints and a circling mode of operation in which the vessel autonomously tracks a circle around a waypoint, wherein when the vessel is piloted in said straight line mode, the overall thrust level applied to the first and second thrusters and the thrust differential between the first and second thrusters are controlled to maintain the vessel on the line, and wherein when the vessel is piloted in said circling mode, the overall thrust level applied to the first and second thrusters and the thrust differential between the first and second thrusters are controlled to maintain the vessel on the circle.

### Brief description of the drawings

The present invention will now be described with reference to the accompanying drawings, in which:

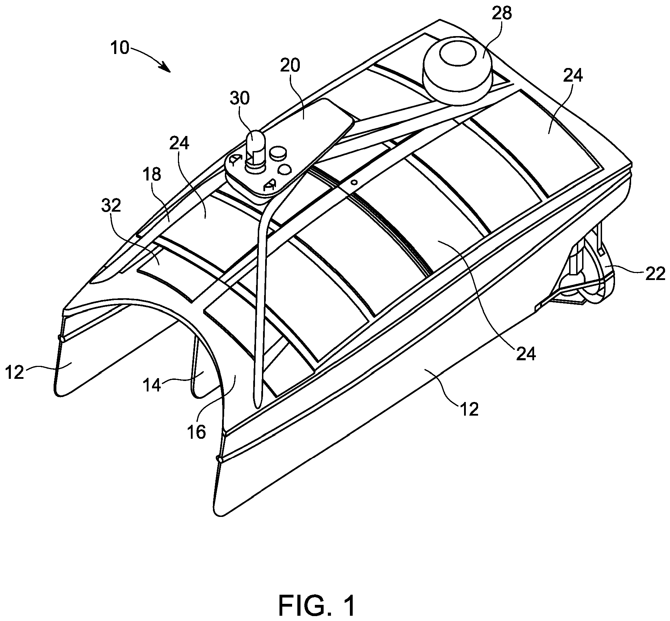

Figure 1 illustrates a perspective view of an unmanned marine surface vessel according to a preferred embodiment of the present invention;

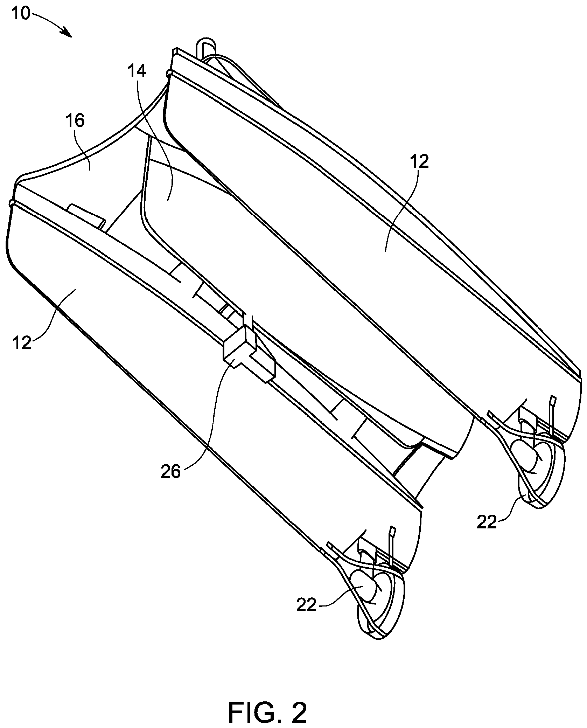

Figure 2 illustrates a perspective view from beneath of the vessel shown in Fig. 1;
Figure 3 illustrates the principle of independently controllable fixed thrusters using co-ordinated difference of thrust to achieve vessel steering;
Figure 4 illustrates a route taken by the vessel when a piloting system thereof is operating in a straight line mode of operation;
Figure 5 also illustrates a route taken by the vessel when a piloting system thereof is operating in a straight line mode of operation;
Figure 6 a route taken by the vessel when a piloting system thereof is operating in a circling mode of operation;
Figure 7 illustrates the vessel when a piloting system thereof is operating in a straight line mode of operation;
Figure 8 illustrates the vessel when a piloting system thereof is using the vessel's course over ground as the source for direction error;
Figure 9 illustrates the vessel when a piloting system thereof is using the vessel's heading as the source for direction error;
Figure 10 illustrates the vessel when a piloting system thereof is operating in a circling mode of operation;
Figure 11 (a) illustrates power co-ordination provided by the piloting system;
Figure 11 (b) provides a graph further illustrating power co-ordination provided by the piloting system;
Figure 12 illustrates the piloting system maintaining the vessel at a constant speed over ground in response to a following wind or tide; and
Figure 13 illustrates the piloting system maintaining the vessel at a constant speed over ground in response to head wind or tide.

### Detailed description of the drawings

Referring now to the accompanying drawings there is illustrated an unmanned marine surface vessel, generally indicated as (10), for use in collecting various ocean and/or environmental or other data, and is particularly designed for use in so called "over the horizon" deployments, facilitating significantly greater periods of time at sea, at significantly reduced costs and risk than a conventional manned vessel, thereby allowing substantially larger areas of ocean to be traversed and thus larger volumes of data to be collected and analysed.

As the vessel (10) is designed as an unmanned (and potentially fully autonomous vehicle), there is no requirement for crew space, deck space, a wheel house, storage for food, safety equipment such as life jackets, etc. and as a result the vessel (10) is significantly reduced in size relative to a conventional vessel, in particular having a significantly reduced height and thereby dramatically lowering the centre of gravity in order to achieve improved stability when floating on the water. As a result of the reduced size and weight of the vessel (10) it is possible to operate the vessel (10) with a much smaller motor and fuel load that is required for conventional manned vessels.

The exemplary vessel (10) may comprise an identical pair of outer hulls (12) spaced from one another and which, in use, are simultaneously located in the water in order to provide the primary buoyancy to the vessel (10). The vessel (10) may additionally comprises a centre hull (14) disposed between and in parallel to the outer hulls (12). In the exemplary embodiment illustrated the hulls (12, 14) are moulded as a monocoque form from fibreglass or the like, although it will be appreciated that any other suitable materials and/or methods of manufacture may be employed. The hulls (12, 14) are joined by an overarching deck (16) which again may be formed from any suitable material, and in the preferred embodiment is moulded from fibre glass and bonded to the outer hulls (12) and the centre hull (14). Both the outer hulls (12) and the centre hull (14) are hollow and adapted to carry both fixed equipment such as a power supply (not shown) and related fuel source (not shown) for the vessel (10), in addition to variable pay load depending on the operation being undertaken by the vessel (10). However, it will be appreciated that the vessel may also be provided with a single hull and the method and system for piloting a vessel described hereinafter is not limited to a multiple hull vessel.

The vessel (10) further comprises an upstanding gantry type frame (18) which is located above and over the deck (16), and in the preferred embodiment illustrated carries a platform (20) on which one or more sensors and/or transmitters or receivers or other such equipment may be mounted. The frame (18) may be detachably mounted to the deck (16) or any other suitable location, and in the embodiment illustrated is formed from tubular steel or the like, although again any other suitable alternative material may be employed.

Located towards the rear of each of the outer hulls (12) is drive means in the form of a thruster (22) which are each fixed in position, that is to say they are not rotatable in order to effect steering of the vessel (10) as is normally the case, but rather steering is effected by differential thrust between the pair of thrusters (22). In the exemplary embodiment illustrated, each of the thrusters (22) is in the form of a nacelle including an enclosed or ducted propeller blade (not shown), although it will appreciated that any other functional alternative may be employed, for example a water jet type thruster. In the single hull embodiment of the vessel, the thrusters are attached to the rear of the hull and spaced apart from each other.

The pair of thrusters (22) are electrically powered from a battery (not shown) located, in the embodiment illustrated, in the centre hull (14) as hereinafter described. The battery (not shown) is preferably charged by a diesel generator (not shown) which may be located in the centre hull (14), supplied with fuel from a liquid fuel tank (not shown), again also preferably located in the centre hull (14).

In order to supplement the generator (not shown) the vessel (10) is also preferably provided with an array of solar panels (24) which may be positioned at any suitable location, and in the preferred embodiment illustrated cover much of the upper surface of the deck (16), although it will be understood that the number and configuration of the solar panels (24) may be altered as required. The hardware required to convert the electrical energy generated by the solar panels (24) to the correct current and/or voltage to charge the battery (not shown) may be located in the centre hull (14) and/or in one or other of the outer hulls (12). The provision of the solar panels (24) reduces the fuel consumption of the generator in producing electrical power for the thrusters (22), again increasing the range and/or ocean going time of the vessel (10).

One of the primary sensors provided on the vessel 10 is a sonar or ultrasonic sensor (26) which in the preferred embodiment illustrated is provided on the end of a pole which extends downwardly from the keel of the centre hull (14), and preferably at or adjacent the centre of mass of the vessel (10) in order to reduce the amount of movement experienced by the ultrasonic sensor (26) in undulating waters, and therefore potentially improving the operational ability in poor weather conditions. It will also be so understood that additional or alternative marine instruments (not shown) may be mounted in place of or in addition to the ultrasonic sensor (26).

The vessel (10) additionally comprises a satellite/GPS receiver (28) mounted above the deck (16) in a conventional protective housing and operable effect two way communicate with the iridium constellation of low orbit satellites in order to allow extremely accurate positioning and navigation of the vessel (10), while also allowing route information to be transmitted to and from the vessel (10). GPS positioning allows for accurate routing to be (autonomously) followed by the vessel (10), enables an operator to establish an exact position of the vessel (10) at any given time, and to establish whether or not the vessel (10) is moving or stationary. An existing route being navigated by the vessel (10) can be modified in real time and new routes sent to the vessel (10) to be applied immediately or when the current route has been completed. The vessel additionally comprises sensory equipment (not shown) for determining the heading of the vessel and rate of turn. For example, a Garmin course computer unit (CCU) mounted in the forward half of the vessel may be provided.

For collision avoidance the vessel (10) may be provided with a camera (30) for capturing images. A thermal imaging camera could also be used which would allow for night vision, the vessel (10) also being provided with an image processing system e.g., image processing and recognition software running on suitable hardware (not shown) such as a programmable logic controller or computer contained within one of the hulls (12, 14), to analyse image files to detect possible collision risks. If a collision risk exists, a pre-determined set of actions (stop, turn to port/starboard etc.) are taken depending on the position, speed and course of the collision risk. A conventional automatic identification system (AIS) and a short range radar, for example having a range of fifty metres or less, are also preferably installed to improve collision avoidance. Each of these systems will again be controlled, possibly autonomously, via suitable control software and hardware contained on the vessel (10). A conventional beacon is also preferably provided on the platform (20) in order to provide visibility of the vessel (10) to other marine craft.

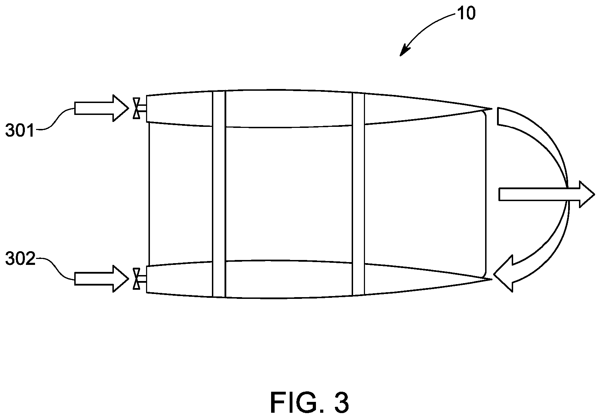

As mentioned above, the vessel (10) is powered by two electric thrusters, one at the stern of each main hull or spaced apart on a single hull configuration. Steering of the vessel is effected through differential thrust. That is, the vessel may include a piloting system that provides control signals to the thrusters (22). The piloting system uses data received from the GPS receiver (28) as well as from the heading sensory equipment when determining the control signals that should be provided to the thrusters (22). In figure 3, the vessel is to be turned to the right while moving forwards. To achieve this a greater amount of thrust is applied to the left thruster (301) than the right thruster (302), in order to push that hull faster through the water and cause the vessel (10) to turn. As outlined in more detail below, small corrections in course are achieved by subtracting the same amount of power to the right thruster (302) as is added to the left thruster (301), with both starting at an 'average' level, chosen to achieve a desired vessel speed. This means that course corrections are achieved with no net change to the total forward thrust applied to the vessel, and therefore maintain a reasonably constant vessel speed and power consumption. As is known to the skilled person in the art, the avoidance of sharp increases in power consumption will result in longer battery life.

Large changes in direction (e.g. 90 degree turns) may require a larger differential and the concept of maintaining constant power consumption may no longer be possible.

The power to each thruster (and therefore the steering) is determined by the piloting system as a function of two parameters and a number of weighting factors. The two parameters are thrust setting (TS) and thrust differential (TD). The function of these two parameters is:
TS - Sets the overall thrust level of the vessel, effectively setting the average power between the two thrusters and therefore the speed. This parameter could be set either by the user as a thrust setting for a leg of a predetermined route, or alternatively controlled by the vessel to achieve a target speed over ground as outlined in more detail hereinafter.
TD - Sets the difference between left (port) thruster (301) and right (starboard) thruster (302), which controls the level of turning effort applied to the vessel and hence the steering. The thrust differential is set through a calculation involving navigation and vessel response information as discussed in in more detail hereinafter.

In operation there are two key modes in which the piloting system functions in order to provide autonomous piloting of the vessel. These modes form the building blocks of more complicated piloting control strategies. The first mode is to follow a route, comprised of straight lines defined by a set of waypoints, and the second is to circle a defined waypoint. In practise, the first mode can be broken down into the requirement to track a line between any two waypoints, with the waypoints and lines changing as the route is progressed. The second mode is used as a means of 'actively' maintaining a position.

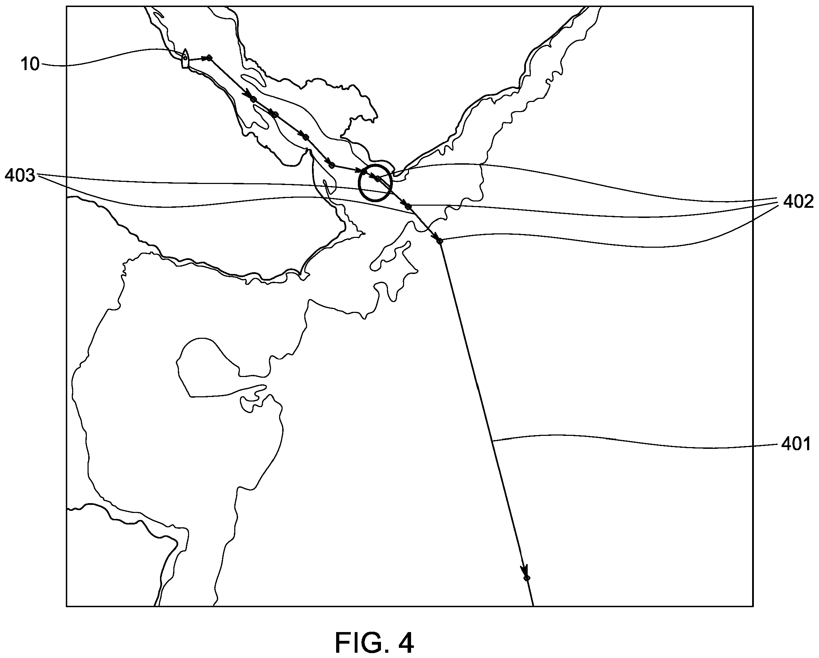

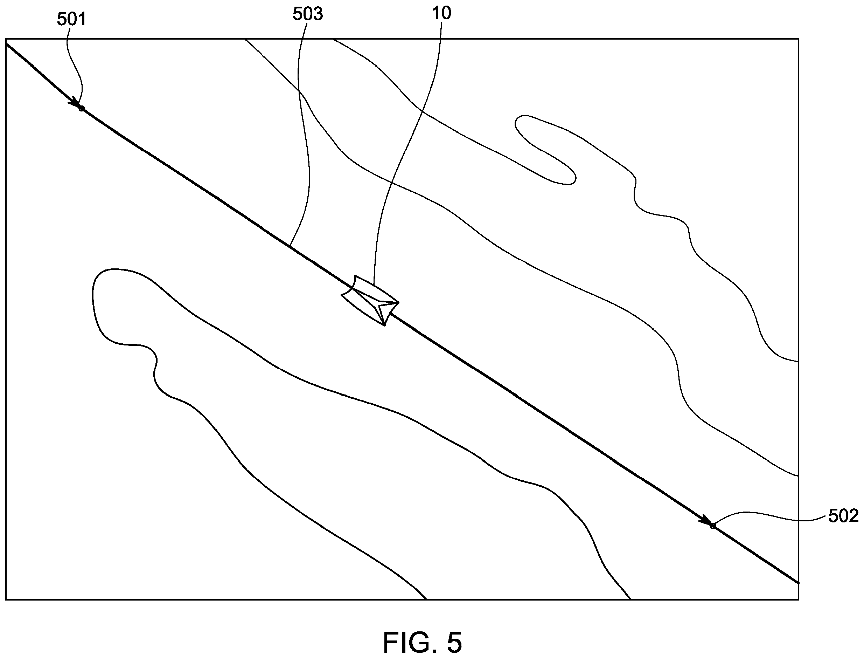

Figures 4 and 5 illustrate the first mode of operation of the piloting system - the straight line mode. With reference to the example of figure 4, a route (401) has been created and provided to the piloting system to navigate the vessel (10) out of a lough and in to the sea. The route is comprised of a series of waypoints (402), globally defined by their latitude and longitude, connected by straight lines (403). Each straight line can be referred to as a 'leg' of the route, defined by the waypoints (402) at its start and end. At any given moment, the vessel is essentially only required to position itself relative to the two waypoints (402) and the line (403) between the waypoints that form the current leg of the route.

In figure 5, a leg start waypoint (501) and a leg end waypoint (502) joined by a line or track (503) are shown. Once the waypoint (502) at the end of the leg is reached, it becomes the start point of the next leg of the route. The capability to autonomously track a line between two waypoints is therefore the building block from which a route of any distance or complexity can be constructed.

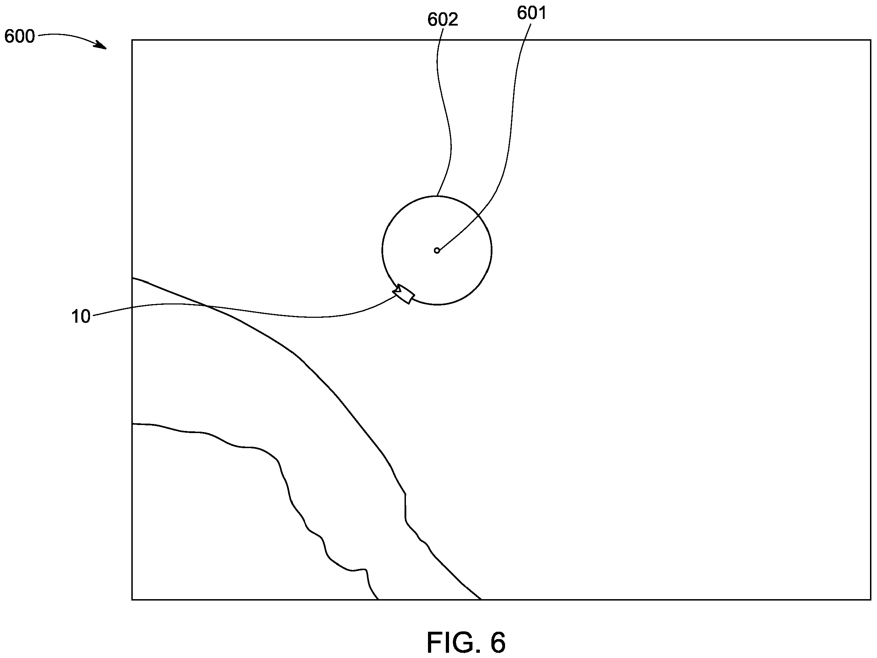

Figure 6 illustrates the second mode of operation of the piloting system - the circling mode. In this example the vessel (10) is circling a defined waypoint just off a quay in a lough. This mode can be used as a defined 'holding pattern' where, while being under active control (as opposed to passively drifting), the vessel is not making net movement in any direction. In this circling mode, the vessel (10) is controlled to circle a chosen geographic point (601). The vessel can track a circle (602) of any desired radius.

This circling mode allows the vessel to maintain an active hold position, rather than simply drifting uncontrolled. This circling mode could be used in the following circumstances:
1. At the end of a list of waypoints, while waiting for further instructions.
2. When an operator wishes for the vessel to 'standby' and make no net progress while a decision is made.
3. As a pre-programmed hold point as part of a route e.g. just before a vessel crosses a shipping lane, awaiting a 'proceed' instruction from the operator.
4. As a mode to be used during surveying. During bathymetric surveying an instrument known as a sound velocity profiler must be periodically lowered to the seabed and retrieved. Measurements from this profiler are then used to correct information collected by the main survey sensor. When the profiler is to be deployed, the vessel can enter the circling mode while the sensor is deployed and recovered
5. Any other scenario where it is desirable for the vessel to be in 'active' control but making no net progress.

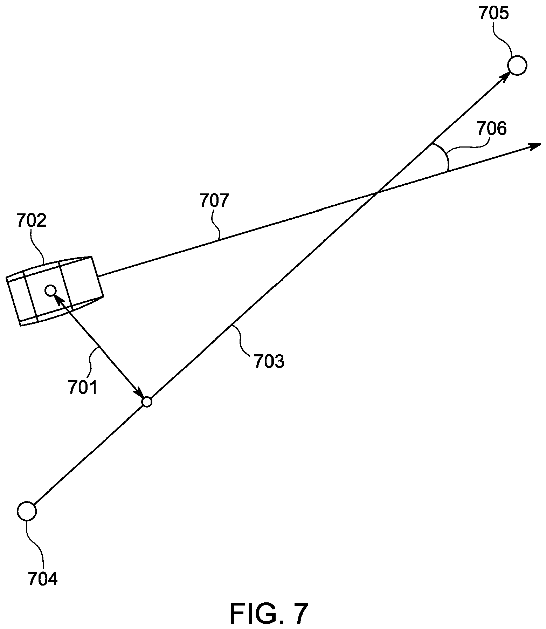

As previously mentioned, the fundamental building block of the system and method for piloting the vessel is the ability to track a line between two points. In figure 7, some key terms are defined. The information used to create the steering input is the Cross-Track Error (XTE) and the Direction error (De). As explained hereinafter, the Direction Error can be one of Course over ground error (COGe) and heading error (HDGe).

XTE (701) is the shortest distance from the current vessel position (702) and the track (703) between the start waypoint (704) and end waypoint (705) of the leg. The XTE provides the signal to steer the vessel back towards the track. That is, if the piloting system determines that an XTE exists, it will adjust the steering to steer the vessel towards the track. COGe (706) is the angle between the direction in which the vessel is currently travelling (Course Over Ground (COG) 707) and the bearing/track between the two waypoints (703, 704). The COGe (706) provides the signal for the vessel to straighten along the track. That is, if the piloting system determines that a COGe exists, it will adjust the steering to straighten the vessel along the track.

XTE, COGe and HDGe are derived from the following information:
1) Start Waypoint (latitude and longitude) - user defined during route planning.
2) End Waypoint (latitude and longitude) - user defined during route planning.
3) Vessel Position (latitude and longitude) - read from the GPS unit on the vessel (can be updated at a frequency of 10hz).
4) Course over ground - read from the GPS unit on the vessel (can be updated at a frequency of 10hz).
5) Speed over ground - read from the GPS unit on the vessel (can be updated at a frequency of 10hz).
6) Vessel heading - read from the containing sensory equipment used to determine heading (and rate of turn).

An important aspect of the navigation of the vessel in is the use of 'Course-over-ground' (COG) versus Heading (HDG) by the piloting system when calculating vessel Direction Error (De). That is, the direction error can be based on either the course over ground i.e. the direction the vessel is travelling, calculated by the off-the shelf GPS sensor, or the vessel heading (HDG) i.e. the direction the vessel is pointing.

The use of COG or HDG as the Direction Error is applicable to either mode of operation. The purpose of using COG instead of vessel heading as the determinant for the direction error is to allow the vessel to travel precisely along a track or path in conditions that include a cross-track current or wind as will be explained in more detail.

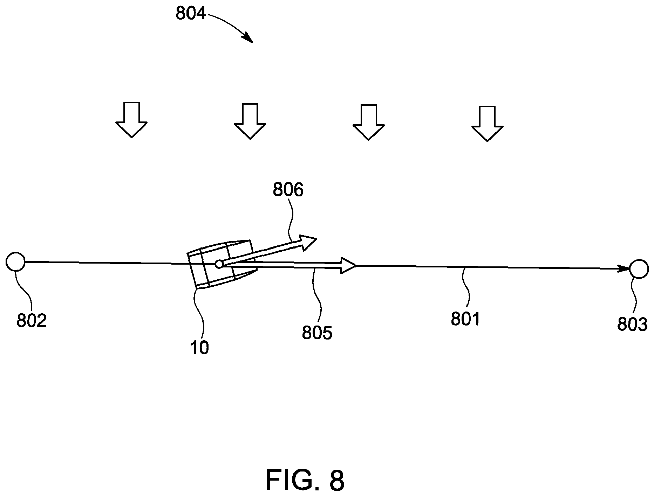

Turning to figure 8, this shows the piloting system using Course over Ground (COG) as the source for direction error. It is desired that the vessel (10) follow or track a straight line (801) between a start waypoint (802) and end waypoint (803). A cross tide or wind (804) is pushing against the port side of the vessel. Using COG (805) as the source for direction error means that the vessel (10) can remain on the track/straight line (801) in conditions that require it to "crab" along the track. That is, in the example of figure 8, XTE is zero and COG error is zero. Therefore the control system will apply the same thrust to both sides and vessel will continue to travel along the track correctly.

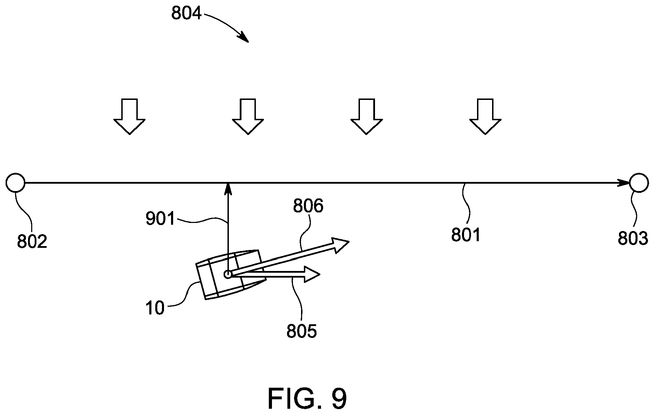

Figure 9 gives an example of using vessel heading (HDG) (806) as the source for direction error in the same tide/wind conditions (804) as outlined with respect to figure 8. In this case, if HDG (806) is used, the vessel will be off track in conditions that require it to "crab" along the track. That is, in the example of Figure 9, the piloting system wants to steer the vessel to the right to correct the heading error (difference between where the vessel is pointed and the direction of the line between the two waypoints). This is counteracted by the cross track error (901) which causes the piloting system to want to steer the vessel (10) to the left to follow the track (801). An equilibrium has been reached in this example, where the vessel COG (805) is parallel to the intended track (801), but with a non-zero XTE (901).

It is clear from the above example that the use of Course over Ground (COG) as the source for direction error is more appropriate than the heading in the conditions outlined with respect to figures 8 and 9.

However, there are a few examples of times when using the COG is inappropriate:
- Starting from zero velocity - at this time the COG can be essentially random due to the negligible velocity, causing instability in the steering calculation.
- In conditions with high currents opposing the forward motion - the vessel may need to travel in high tidal currents, or in other situations where it is unable to make forward motion for a period of time. Therefore, the vessel may be required to hold its position along a track while waiting for the current to change. The course over ground may be 'backwards' relative to the track for this time, and would therefore be inappropriate for steering control.

To counter these situations, the piloting system is configured such that:
- In situations where speed over ground is <0.25 knots, the vessel heading is used as the source of direction error instead of the course over ground.
- In situations where the COGe is greater than 90 degrees, the vessel heading should be used, regardless of the speed over ground. This is because, for instance, if the vessel is set to do 3.5 knots but there is a 4.5 knot current running, the speed over ground would be 1 knot backwards, and use of COG would lead to instability.

This piloting system logic means that in a condition where there is an overwhelming current pushing the vessel 'backward' down a track *and* a cross current pushing the vessel 'off' the track, use of the vessel heading for the steering commands will cause the vessel to stabilise with a non-zero cross-track error. However this is considered appropriate in the scenario that the vessel is unable to make forward progress - control stability is prioritised over accuracy.

Having calculated or determined the cross-track error (XTE) and direction error (De) the signal to the thrusters with a power setting for each can be constructed by the piloting system. As previously mentioned, the method and system for piloting the vessel in accordance with present teachings makes use of two variables to construct the overall power to each thruster. The first variable is the thrust setting (TS), which defines the overall thrust level for the vessel. This value can be either set by the user or set by the piloting system in response to the vessel speed over ground in relation to a user defined speed over ground. The second variable is the thrust differential (TD), which sets a difference in left and right thrust around the thrust setting in response to the steering requirements. As previously mentioned, the piloting system operating in a circling mode allows the vessel to remain under active, powered control while making zero net progress in any direction. This mode can be used during surveying for holding a position during deployment and retrieval of an instrument to the seabed.

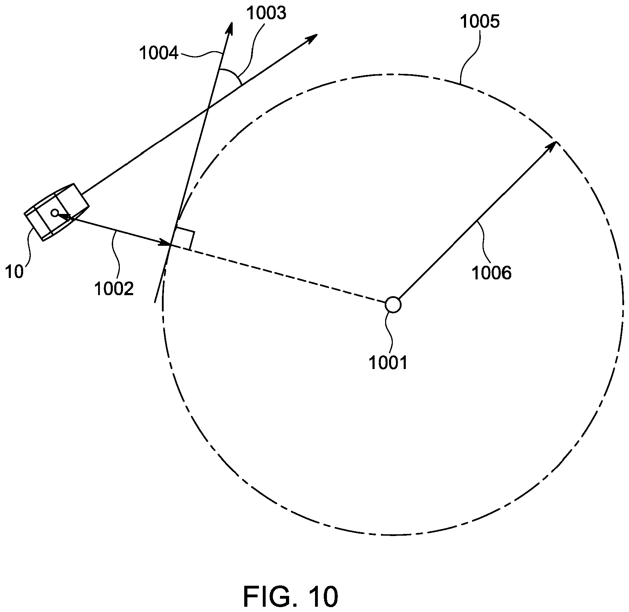

The basics of the navigation calculations for circling a point are very similar to those for following a track as outlined above. The concepts of cross-track error (XTE) and course over ground error (COGE) can still be applied. With reference to figure 10, the cross-track error (1002) and course over ground error (1003) are with respect to a tangent (1004) to the circle (1005) on the line between the vessel (10) and the circle (1005). Figure 10 illustrates the vessel (10) circling a waypoint (1001) in a clockwise sense (the waypoint (1001) is always on the starboard side of the vessel). For circling the point anti-clockwise (i.e. with the waypoint on the port side of the vessel) the sign of the cross track error is reversed, and the direction of the tangent to the circle is reversed.

The cross track error (1002) is the circling mode of operation is the distance between the vessel (10) and the waypoint (1001) minus the circle radius (1006) (or vice-versa according to clockwise/anticlockwise rotation). The circle tangent (1004) is the bearing from the vessel to the circling waypoint (1007), rotated by +/-90 degrees depending on clockwise/anticlockwise rotation. The course of over ground error (1003) is the angle between the direction in which the vessel is currently travelling (COG) and the circle tangent (1004).

The heading error is the angle between where the vessel is pointed and the tangent to the circle. In a similar manner as the straight line mode, the system can use either of heading error or course over ground error as the direction error.

The steering calculations when travelling in a circle are similar to those for following a track (straight line mode), and are comprised of a thrust setting (TS) and a thrust differential (TD) as before. As previously mentioned, the piloting system provides co-ordination of the differential thrust with respect to the thrusters in such a way that for small course corrections (e.g. when following a line between two points) the steering is achieved with minimal change to vessel power consumption and speed. That is, the power 'added' to one thruster is the same as the power 'removed' from the other, and so the average power consumption is constant and the vessel speed changes as little as possible.

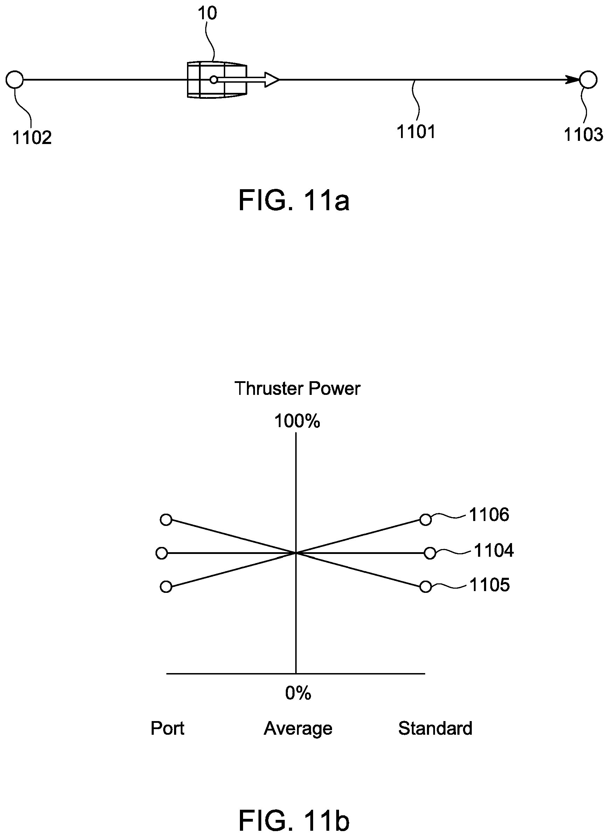

Figure 11(a) illustrates the power co-ordination provided by the piloting system of the present teachings. In this figure, the vessel (10) is traveling along a track (1101) between in start waypoint (1102) and an end waypoint (1103) in still water. The control system makes corrections to keep the vessel on the track (1101). Average power remains the same at all times and the vessel speed is steady. For example, with reference to the graph of figure 11(b), the horizontal line (1104) shows both thrusters at same power setting i.e., no turning. When the starboard power is reduced, port thruster power increased accordingly and the vessel boat turns to starboard - (1105). When the port thruster power is reduced, the starboard thruster power is increased in proportion and the boat turns to port - (1106).

The method and system for piloting the unmanned marine vessel in accordance with the present teachings has a number of advantages with respect to the prior art.

The piloting system includes a GPS unit on the vessel which outputs real time vessel speed over ground to control both the vessel average thrust level (TS) and thrust differential (TD) in order to track along a specified course at a defined speed over ground in a dynamic environment.

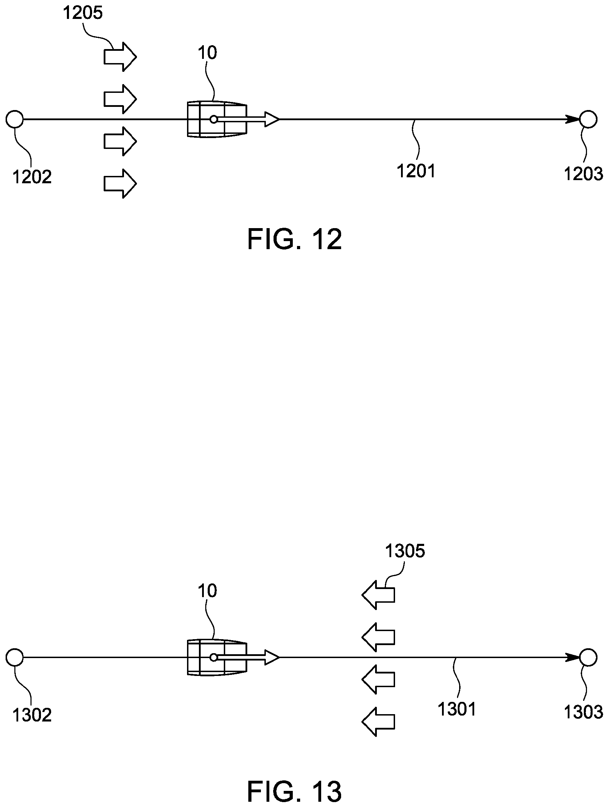

With reference to figure 12, the vessel is travelling along a track (1201) between a start waypoint (1202) and an end waypoint (1203). The vessel (10) has a following wind/tide (1205). That is, there is wind/tide (1205) in the same direction as the vessel (10) is travelling. The wind/tide (1205) increases the vessel speed, and so to keep a steady "speed over ground" (SOG), the average power level of the thrusters on the vessel is reduced.

With reference to figure 13, the vessel (10) is travelling along a track (1301) against wind or tide (1305) between a start waypoint (1302) and an end waypoint (1303). The wind/tide (1305) slows the vessel (10) down. Therefore, in order to maintain a constant SOG the average power level of the thrusters is automatically increased by the piloting system.

The present teachings provide a system and method for piloting an unmanned vessel which uses information gathered from standard marine electronic sensors (GPS position, rate of turn, course over ground, and speed over ground) to calculate the differential required to achieve the necessary vessel steering. This calculation is updated at high frequency to achieve accurate steering according to the vessel response and environmental conditions (wind gusts, waves, etc.).

The system and method can include a 'throttle' control, which can dynamically modify the thrusters' average setting and thereby change the net thrust applied to the vessel, and hence its speed through water. This control is linked to the speed over ground measurement provided by the GPS sensor, and can be used to maintain a desired speed over ground in dynamically changing conditions (currents, wind, waves etc.). This is desirable from the point of view of the sensors deployed on the vessel, where a constant 'scanning' speed across the seabed could potentially be a valuable feature.

## Claims

1. A piloting system for an unmanned marine vessel (10) having a first thruster (22) and a second thruster (22) attached to the vessel, the first thruster (22) and second thruster (22) spaced apart from each other;
wherein the system is configured to pilot the vessel in a straight line mode of operation in which the vessel (10) autonomously tracks a line between two waypoints and a circling mode of operation in which the vessel autonomously tracks a circle around a waypoint;
wherein when the vessel is piloted in said straight line mode, the system is configured to control the overall thrust level applied to the first and second thrusters and the thrust differential between the first and second thrusters to maintain the vessel on the line;
**characterised in that**:
when the vessel is piloted in said circling mode, the system is configured to control the overall thrust level applied to the first and second thrusters and the thrust differential between the first and second thrusters to maintain the vessel (10) on the circle; and
the system is configured to calculate the thrust differential using cross track error, in the circling mode the cross track error is the distance between the vessel (10) and the waypoint minus the radius of the circle.

2. The system of claim 1 wherein the overall thrust level is automatically adjusted by the system in response to a predetermined target velocity and measured speed over ground in order to achieve the target velocity.

3. The system of claim 1 or 2 wherein controlling the thrust differential between the first and second thruster includes increasing the thrust to the first thruster and decreasing the thrust from the second thruster by the same amount so that the average power consumption of the first and second thrusters is constant.

4. The system of any one of claims 1 to 3 in the straight line mode the cross track error is the distance between the vessel (10) and the line.

5. The system of claim 4 wherein if a cross track error is detected in the straight line mode the system is configured to adjust the thrust differential to steer the vessel (10) to reduce the cross track error to zero.

6. The system of any one of claims 1 to 5 wherein the system is further configured to calculate the thrust differential using one of course over ground error and heading error, in the straight line mode the course over ground error is the angle between the direction in which the vessel (10) is travelling and the line and the heading error is the angle between where the vessel (10) is pointed and the line.

7. The system of claim 6 wherein if a course over ground error is detected the system is configured to adjust the thrust differential to steer the vessel (10) to reduce the angle between the direction in which the vessel is travelling and the line to zero.

8. The system of claim 6 wherein if a heading error is detected the system is configured to adjust the thrust differential to steer the vessel (10) to reduce angle between where the vessel is pointed and the line to zero.

9. The system of claim 1 wherein if a cross track error is detected in the circling mode the system is configured to adjust the thrust differential to steer the vessel (10) to reduce the cross track error to zero.

10. The system of any one of claims 1 to 3 wherein the system is further configured to calculate the thrust differential using one of course over ground error and heading error, in the circling mode the course over ground error is the angle between the direction in which the vessel (10) is travelling and a tangent to the circle, the heading error is the angle between where the vessel is pointed and the tangent to the circle, the tangent being the bearing from the vessel to the waypoint rotated by 90 degrees.

11. The system of claim 10 wherein if a course over ground error is detected the system is configured to adjust the thrust differential to steer the vessel (10) to reduce the angle between the direction in which the vessel is travelling and the tangent to zero.

12. The system of claim 10 or 11 wherein if a heading error is detected the system is configured to adjust the thrust differential to steer the vessel (10) to reduce angle between where the vessel is pointed and the tangent to zero.

13. The system of any one of claims 10 to 12 wherein the tangent is at a constantly changing angle around the circle as the vessel moves and the system is configured to compensate for this by creating an additional steering signal to provide oversteer in order to maintain the vessel on the circle.

14. A method for piloting an unmanned marine vessel (10) having a first thruster (22) and a second thruster (22) attached to the vessel (10), the first thruster (22) and second thruster (22) spaced apart from each other, the method comprising:
piloting the vessel (10) in a straight line mode of operation in which the vessel (10) autonomously tracks a line between two waypoints and a circling mode of operation in which the vessel autonomously tracks a circle around a waypoint;
wherein when the vessel is piloted in said straight line mode, the overall thrust level applied to the first and second thrusters and the thrust differential between the first and second thrusters are controlled to maintain the vessel on the line;
**characterised in that**:
when the vessel is piloted in said circling mode, the overall thrust level applied to the first and second thrusters and the thrust differential between the first and second thrusters are controlled to maintain the vessel on the circle; and
the thrust differential is calculated using cross track error, in the circling mode the cross track error is the distance between the vessel (10) and the waypoint minus the radius of the circle.

15. The method of claim 14 wherein if a cross track error is detected in the circling mode the thrust differential is adjusted to steer the vessel (10) to reduce the cross track error to zero

## Patentansprüche

1. Steuersystem für ein unbemanntes Seeschiff (10) mit einem ersten Strahlruder (22) und einem zweiten Strahlruder (22), die an dem Schiff angebracht sind, wobei das erste Strahlruder (22) und das zweite Strahlruder (22) voneinander beabstandet sind;
wobei das System dazu konfiguriert ist, das Schiff in einem Geradeaus-Betriebsmodus, in dem das Schiff (10) autonom einer Linie zwischen zwei Wegpunkten folgt, und in einem Kreisfahrt-Betriebsmodus, in dem das Schiff autonom einem Kreis um einen Wegpunkt folgt, zu steuern;
wobei, wenn das Schiff in dem Geradeaus-Modus gesteuert wird, das System dazu konfiguriert ist, den auf das erste und zweite Strahlruder ausgeübten Gesamtschubpegel und die Schubdifferenz zwischen dem ersten und zweiten Strahlruder zu regulieren, um das Schiff auf der Linie zu halten;
**dadurch gekennzeichnet, dass**:
wenn das Schiff in dem Kreisfahrt-Modus gesteuert wird, das System dazu konfiguriert ist, den auf das erste und zweite Strahlruder ausgeübten Gesamtschubpegel und die Schubdifferenz zwischen dem ersten und zweiten Strahlruder zu regulieren, um das Schiff (10) auf dem Kreis zu halten; und
das System dazu konfiguriert ist, die Schubdifferenz anhand der Querabweichung zu berechnen, wobei im Kreisfahrt-Modus die Querabweichung der Abstand zwischen dem Schiff (10) und dem Wegpunkt minus dem Radius des Kreises ist.

2. System nach Anspruch 1, wobei der Gesamtschubpegel durch das System als Reaktion auf eine vorbestimmte Zielgeschwindigkeit und eine gemessene Geschwindigkeit über Grund automatisch eingestellt wird, um die Zielgeschwindigkeit zu erreichen.

3. System nach Anspruch 1 oder 2, wobei das Regulieren der Schubdifferenz zwischen dem ersten und zweiten Strahlruder ein Erhöhen des Schubs zu dem ersten Strahlruder und ein Verringern des Schubs von dem zweiten Strahlruder um den gleichen Betrag umfasst, so dass der durchschnittliche Energieverbrauch des ersten und zweiten Strahlruders konstant ist.

4. System nach einem der Ansprüche 1 bis 3, wobei in dem Geradeaus-Modus die Querabweichung der Abstand zwischen dem Schiff (10) und der Linie ist.

5. System nach Anspruch 4, wobei, wenn eine Querabweichung im Geradeaus-Modus erfasst wird, das System dazu konfiguriert ist, die Schubdifferenz zum Lenken des Schiffes (10) so einzustellen, dass die Querabweichung auf null reduziert wird.

6. System nach einem der Ansprüche 1 bis 5, wobei das System ferner dazu konfiguriert ist, die Schubdifferenz unter Verwendung eines Kurs-über-Grund-Fehlers oder eines Steuerkursfehlers zu berechnen, wobei der Kurs-über-Grund-Fehler im Geradeaus-Modus der Winkel zwischen der Richtung, in der das Schiff (10) fährt, und der Linie ist und der Steuerkursfehler der Winkel zwischen der Ausrichtung des Schiffes (10) und der Linie ist.

7. System nach Anspruch 6, wobei, wenn ein Kurs-über-Grund-Fehler erfasst wird, das System dazu konfiguriert ist, die Schubdifferenz einzustellen, um das Schiff (10) zu lenken, um den Winkel zwischen der Richtung, in der das Schiff fährt, und der Linie auf null zu reduzieren.

8. System nach Anspruch 6, wobei, wenn ein Steuerkursfehler erfasst wird, das System dazu konfiguriert ist, die Schubdifferenz einzustellen, um das Schiff (10) zu lenken, um den Winkel zwischen der Ausrichtung des Schiffes und der Linie auf null zu reduzieren.

9. System nach Anspruch 1, wobei, wenn eine Querabweichung in dem Kreisfahrt-Modus erfasst wird, das System dazu konfiguriert ist, die Schubdifferenz einzustellen, um das Schiff (10) zu lenken, um die Querabweichung auf null zu reduzieren.

10. System nach einem der Ansprüche 1 bis 3, wobei das System ferner dazu konfiguriert ist, die Schubdifferenz unter Verwendung eines Kurs-über-Grund-Fehlers oder eines Steuerkursfehlers zu berechnen, wobei der Kurs-über-Grund-Fehler in dem Kreisfahrt-Modus der Winkel zwischen der Richtung, in der das Schiff (10) fährt, und einer Tangente an den Kreis ist, der Steuerkursfehler der Winkel zwischen der Ausrichtung des Schiffes und der Tangente an den Kreis ist, wobei die Tangente die um 90 Grad gedrehte Peilung vom Schiff zum Wegpunkt ist.

11. System nach Anspruch 10, wobei, wenn ein Kurs-über-Grund-Fehler erfasst wird, das System dazu konfiguriert ist, die Schubdifferenz einzustellen, um das Schiff (10) zu lenken, um den Winkel zwischen der Richtung, in der das Schiff fährt, und der Tangente auf null zu reduzieren.

12. System nach Anspruch 10 oder 11, wobei, wenn ein Steuerkursfehler erfasst wird, das System dazu konfiguriert ist, die Schubdifferenz einzustellen, um das Schiff (10) zu lenken, um den Winkel zwischen der Ausrichtung des Schiffes und der Tangente auf null zu reduzieren.

13. System nach einem der Ansprüche 10 bis 12, wobei die Tangente einen sich konstant ändernden Winkel um den Kreis herum aufweist, wenn sich das Schiff bewegt, und das System dazu konfiguriert ist, dies zu kompensieren, indem es ein zusätzliches Lenksignal erzeugt, um ein Übersteuern bereitzustellen, um das Schiff auf dem Kreis zu halten.

14. Verfahren zum Steuern eines unbemannten Seeschiffes (10) mit einem ersten Strahlruder (22) und einem zweiten Strahlruder (22), die an dem Schiff (10) angebracht sind, wobei das erste Strahlruder (22) und das zweite Strahlruder (22) voneinander beabstandet sind, wobei das Verfahren Folgendes umfasst:
Steuern des Schiffes (10) in einem Geradeaus-Betriebsmodus, in dem das Schiff (10) autonom einer Linie zwischen zwei Wegpunkten folgt, und in einem Kreisfahrt-Betriebsmodus, in dem das Schiff autonom einem Kreis um einen Wegpunkt folgt;
wobei, wenn das Schiff in dem Geradeaus-Modus gesteuert wird, der auf das erste und zweite Strahlruder ausgeübte Gesamtschubpegel und die Schubdifferenz zwischen dem ersten und zweiten Strahlruder reguliert werden, um das Schiff auf der Linie zu halten;
**dadurch gekennzeichnet, dass**:
wenn das Schiff in dem Kreisfahrt-Betriebsmodus gesteuert wird, der auf das erste und zweite Strahlruder ausgeübte Gesamtschubpegel und die Schubdifferenz zwischen dem ersten und zweiten Strahlruder reguliert werden, um das Schiff auf dem Kreis zu halten; und
die Schubdifferenz anhand der Querabweichung berechnet wird, wobei im Kreisfahrt-Modus die Querabweichung der Abstand zwischen dem Schiff (10) und dem Wegpunkt minus dem Radius des Kreises ist.

15. Verfahren nach Anspruch 14, wobei, wenn in dem Kreisfahrt-Modus eine Querabweichung erfasst wird, die Schubdifferenz eingestellt wird, um das Schiff (10) zu lenken, um die Querabweichung auf null zu reduzieren.

## Revendications

1. Système de pilotage pour un navire marin sans pilote (10) ayant un premier propulseur (22) et un second propulseur (22) fixés au navire, le premier propulseur (22) et le second propulseur (22) étant espacés l'un de l'autre ;
dans lequel le système est conçu pour piloter le navire dans un mode de fonctionnement en ligne droite dans lequel le navire (10) suit de manière autonome une ligne entre deux points de cheminement et un mode de fonctionnement circulaire dans lequel le navire suit de manière autonome un cercle autour d'un point de cheminement ;
dans lequel lorsque le navire est piloté dans ledit mode en ligne droite, le système est conçu pour commander le niveau de propulsion global appliqué aux premier et second propulseurs et le différentiel de propulsion entre les premier et second propulseurs pour maintenir le navire sur la ligne ;
**caractérisé en ce que** :
lorsque le navire est piloté dans ledit mode circulaire, le système est conçu pour commander le niveau de propulsion global appliqué aux premier et second propulseurs et le différentiel de propulsion entre les premier et second propulseurs pour maintenir le navire (10) sur le cercle ; et
le système est conçu pour calculer le différentiel de propulsion à l'aide d'une erreur d'écart de route, dans le mode circulaire, l'erreur d'écart de route est la distance entre le navire (10) et le point de cheminement moins le rayon du cercle.

2. Système selon la revendication 1, dans lequel le niveau de propulsion global est automatiquement ajusté par le système en réponse à une vitesse cible prédéterminée et à une vitesse mesurée sur le fond afin d'atteindre la vitesse cible.

3. Système selon la revendication 1 ou 2, dans lequel la commande du différentiel de propulsion entre les premier et second propulseurs comporte l'augmentation de la propulsion vers le premier propulseur et la diminution de la propulsion depuis le second propulseur dans les mêmes proportions de sorte que la consommation électrique moyenne des premier et second propulseurs est constante.

4. Système selon l'une quelconque des revendications 1 à 3, dans le mode en ligne droite, l'erreur d'écart de route est la distance entre le navire (10) et la ligne.

5. Système selon la revendication 4, dans lequel si une erreur d'écart de route est détectée dans le mode en ligne droite, le système est conçu pour ajuster le différentiel de propulsion pour diriger le navire (10) afin de réduire l'erreur d'écart de route à zéro.

6. Système selon l'une quelconque des revendications 1 à 5, dans lequel le système est en outre conçu pour calculer le différentiel de propulsion à l'aide de l'une parmi une erreur de route sur le fond et une erreur de cap, dans le mode en ligne droite, l'erreur de route sur le fond est l'angle entre la direction dans laquelle le navire (10) se déplace et la ligne et l'erreur de cap est l'angle entre l'endroit où le navire (10) est pointé et la ligne.

7. Système selon la revendication 6, dans lequel si une erreur de route sur le fond est détectée, le système est conçu pour ajuster le différentiel de propulsion pour diriger le navire (10) afin de réduire l'angle entre la direction dans laquelle le navire se déplace et la ligne à zéro.

8. Système selon la revendication 6, dans lequel si une erreur de cap est détectée, le système est conçu pour ajuster le différentiel de propulsion pour diriger le navire (10) afin de réduire un angle entre l'endroit où le navire est pointé et la ligne à zéro.

9. Système selon la revendication 1, dans lequel si une erreur d'écart de route est détectée dans le mode circulaire, le système est conçu pour ajuster le différentiel de propulsion pour diriger le navire (10) afin de réduire l'erreur d'écart de route à zéro.

10. Système selon l'une quelconque des revendications 1 à 3, dans lequel le système est en outre conçu pour calculer le différentiel de propulsion à l'aide de l'une parmi une erreur de route sur le fond et une erreur de cap, dans le mode circulaire, l'erreur de route sur le fond est l'angle entre la direction dans laquelle le navire (10) se déplace et une tangente au cercle, l'erreur de cap est l'angle entre l'endroit où le navire est pointé et la tangente au cercle, la tangente étant le relèvement par rapport au navire vers le point de cheminement mis en rotation de 90 degrés.

11. Système selon la revendication 10, dans lequel si une erreur de route sur le fond est détectée, le système est conçu pour ajuster le différentiel de propulsion pour diriger le navire (10) afin de réduire l'angle entre la direction dans laquelle le navire se déplace et la tangente à zéro.

12. Système selon la revendication 10 ou 11, dans lequel si une erreur de cap est détectée, le système est conçu pour ajuster le différentiel de propulsion pour diriger le navire (10) afin de réduire un angle entre l'endroit où le navire est pointé et la tangente à zéro.

13. Système selon l'une quelconque des revendications 10 à 12, dans lequel la tangente est à un angle changeant constamment autour du cercle lorsque le navire se déplace et le système est conçu pour compenser cela en créant un signal de direction supplémentaire pour fournir un survirage afin de maintenir le navire sur le cercle.

14. Procédé de pilotage d'un navire marin sans pilote (10) ayant un premier propulseur (22) et un second propulseur (22) fixés au navire (10), le premier propulseur (22) et le second propulseur (22) étant espacés l'un de l'autre, le procédé comprenant :
le pilotage du navire (10) dans un mode de fonctionnement en ligne droite dans lequel le navire (10) suit de manière autonome une ligne entre deux points de cheminement et un mode de fonctionnement circulaire dans lequel le navire suit de manière autonome un cercle autour d'un point de cheminement ;
dans lequel lorsque le navire est piloté dans ledit mode en ligne droite, le niveau de propulsion global appliqué aux premier et second propulseurs et le différentiel de propulsion entre les premier et second propulseurs sont commandés pour maintenir le navire sur la ligne ;
**caractérisé en ce que** :
lorsque le navire est piloté dans ledit mode circulaire, le niveau de propulsion global appliqué aux premier et second propulseurs et le différentiel de propulsion entre les premier et second propulseurs sont commandés pour maintenir le navire sur le cercle ; et
le différentiel de propulsion est calculé à l'aide d'une erreur d'écart de route, dans le mode circulaire, l'erreur d'écart de route est la distance entre le navire (10) et le point de cheminement moins le rayon du cercle.

15. Procédé selon la revendication 14, dans lequel si une erreur d'écart de route est détectée dans le mode circulaire, le différentiel de propulsion est ajusté pour diriger le navire (10) afin de réduire l'erreur d'écart de route à zéro.
